# EUROPEAN PATENT APPLICATION

(11) **EP 4 316 238 A1**
(43) Date of publication of application: **07.02.2024**
(21) Application number: 22020367.3
(22) Date of filing: 02.08.2022
(51) Int. Cl.: A01K 63/04, B01F 23/213, B01J 4/00

(54) **AN INJECTION ELEMENT FOR INJECTING A FLUID INTO A TANK**

(71) Applicant: Linde GmbH, 82049 Pullach (DE)
(72) Inventor: Obermeyer, Heinz-Dieter, 82049 Pullach (DE); Glomset, Kenneth, 82049 Pullach (DE); Dullstein, Stefan, 82049 Pullach (DE); Dezsi, Sandor, 82049 Pullach (DE); Kirchpfennig, Paolo, 82049 Pullach (DE)
(74) Representative: Lu, Jing

(57) **Abstract**

The present invention relates to an injection element (100') for injecting a fluid into a tank (200), especially for injecting water into the tank (200), especially into a fish tank (200), wherein the injection element (100) comprises an outer pipe (120') and an inner pipe (110') arranged at least partially inside the outer pipe (120'), wherein the inner pipe (110') is extractable at least partially out of an outlet end (121') of the outer pipe (120'), wherein an inlet end (122') of the outer pipe (120') is configured to be connected with a fluid providing device (250), wherein the outer pipe (120') is configured to be arranged mainly outside of an interior volume (220) of the tank (200) and an outlet end (121') of the outer pipe (120') is configured to be connected with an opening in a wall (210) of the tank (200).

## Description

The present invention relates to an injection element and to an injection system for injecting a fluid into a tank, to a tank with as well as to a method of operating a tank.

### Background

Devices for providing fluids to tanks, e.g. water or oxygen enriched water, can comprise e.g. an inlet pipe which is at least partially arranged inside the tank. Outside of the tank, the pipe can be connected to other fluid technology devices like pumps, valves etc.

In fish tanks for fish production or fish farming it is important to provide a constant supply of fresh, clean water in order to ensure healthy fish, prevent diseases, provide appropriate nutrition, and maintain a stable and healthy aquatic environment. Today, more than 50% of the world's seafood comes from land or offshore-based fish farms. For example salmon can be produced in land-based tanks, which today mostly takes place to an average industry size just above 150 gram. Further growth normally takes place in sea cages to a full harvest size. The market is changing wherein more fish will be grown in land based tanks to a larger size, and even to full slaughter size of about 5 kg. For this kind of fish production on land, large production units are provided with individual production tanks targeting volumes up to 5,000 m³ per tank lately.

Production on land in very large tanks can often take place in an environment that reuses water or use a full recirculation loop. In these cases, water retrieved from the tank goes through water treatment steps to be able to be re-used. In order to constantly provide water to production tanks of that kind, a so called "SOLVOX streamline" or "SOLVOX OxyStream" device as distributed by the Applicant can be used. "SOLVOX streamline" is a flow distributor for providing a homogenous distribution of oxygenated water over the complete depth of the tank. "SOLVOX OxyStream" both oxygenates water and provides the oxygenated water to the tank. Both "SOLVOX streamline" and "SOLVOX OxyStream" comprise an inlet pipe placed vertically inside the tank from the rim to the bottom of the tank. The inlet pipe comprises several openings for releasing water into the tank in a horizontal manner with the aim to create a circular flow pattern.

With increasing sizes of production tanks, it is important to provide efficient means of injecting fluids like water or oxygenated water into tanks.

### Disclosure of the invention

The present invention relates to an injection element and to an injection system for injecting a fluid into a tank, to a tank with an injection element or an injection system of that kind as well as to a method of operating a tank of that kind with the features of the independent claims. Further advantages and embodiments of the invention will become apparent from the description and the appended figures.

Advantages and advantageous embodiments of the injection element, the injection system, the tank and the method according to the present invention shall arise from the present description in an analogous manner.

The injection element comprises an outer pipe and an inner pipe arranged at least partially inside the outer pipe. In particular, the outer pipe and the inner pipe can each be provided as a bent pipe. The specific form and the radius of curvature of these bent pipes can particularly be coordinated or matching with each other such that the inner pipe fits into the outer pipe and is able to be moved therein. Particularly, the inner pipe and the outer pipe can each be circularly bent or at least essentially circularly. However, the outer pipe and the inner pipe can especially also each be provided as a straight pipe. It is for example also possible, that a flexible inner pipe that can be moved inside a fixed outer pipe.

In particular, an outer surface of the inner pipe and an inner surface of the outer pipe can correspond with each other and are particularly identical or at least essentially identical. A cross section of the inner pipe and the outer pipe can have expedient forms or geometries and can be e.g. circular shaped, square shaped, triangle shaped, etc.

The inner pipe is extractable or configured to be extracted at least partially out of an outlet end of the outer pipe. The inner pipe is therefore movable or configured to be moved relative to the outer pipe. Particularly, a first end or inlet end of the inner pipe is always arranged inside the outer pipe. A second end or outlet end of the inner pipe is particularly extractable out of the outlet end of the outer pipe and can expediently be moved relative to the outlet end of the outer pipe. Particularly, the outlet end of the inner pipe can at least be moved from a position corresponding to the outlet end of the outer pipe to a maximum extraction position.

For this purpose, the injection element particularly comprises a moving mechanism configured to move the inner pipe relative to the outer pipe, particularly for moving the outlet end of the inner pipe relative to the outlet end of the outer pipe. This moving mechanism can for example comprises a gear meshing with or engaging in a gear rack structure on an outer surface of the inner pipe. The moving mechanism can for example also be a pneumatic system, e.g. using compressed air to move the inner pipe by means of a membrane attached to the inner pipe and a surrounding hosing.

An inlet end of the outer pipe is configured to be connected with a fluid providing device, e.g. a pump, a manifold, a fluid inlet tube or the like. Therefore, a fluid can be provided to the inlet end of the outer pipe. When the inner pipe is arranged completely inside the outer pipe, the fluid can then be ejected out of the outlet end of the outer pipe. When the outlet end of the inner pipe is extracted out of the outer pipe, then the fluid can be ejected out of the outlet end of the inner pipe.

The outer pipe is configured to be arranged mainly or entirely outside of an interior volume of the tank and an outlet end of the outer pipe is configured to be connected with an opening in a wall of the tank. The largest part of the outer pipe or particularly even the entire outer pipe is therefore arranged outside of the interior volume of the tank. Expediently, the outer pipe is at least partially arranged inside the wall of the tank. Particularly, the outlet end of the outer pipe is configured to be arranged outside of an interior volume of the tank. Especially, the outlet end of the outer pipe is configured to be connected with the wall of the tank, expediently at a position in the opening in the wall outside of the interior volume of the tank. A shape of the opening in the tank wall particularly can correspond to the shape of the circumference of the outer pipe. It is, however, also possible to arrange the outer pipe e.g. entirely outside of the tank wall, e.g. such that the outlet end of the outer pipe is connected with the outer surface of the wall.

In particular, this interior volume or inner volume of the tank is to be understood as the space of the tank, which is to be filled or at least partially filled with the corresponding fluid by means of the injection element. This interior volume is expediently enclosed by the wall of the tank. The inner surface of the wall especially faces towards this interior volume whereas the outer surface particularly faces away from the interior volume. This wall can especially have a circular or at least essentially circular shape. However, the wall can also comprise a different shape, e.g. octagonal, rectangular, elliptical, etc. Inside this interior volume, goods can be stored or handled or animals like fishes can be kept or grown.

Therefore, the outer pipe is expediently arranged mostly or entirely outside of the interior volume of the tank. Further, with the inner pipe being movable relative to the outer pipe, it is particularly possible to flexibly extract the inner pipe out of the outer pipe and therefore into the interior volume of the tank. Vice versa it is expediently possible to retract the inner pipe into the outer pipe and therefore to retract the inner pipe out of the interior volume of the tank. It is therefore expediently possible to move the inner pipe relative to the outer pipe such that no part of the injection element is arranged inside the interior volume of the tank or such that only a part of the injection element, namely a part of the inner pipe, is arranged inside the interior volume of the tank.

It can therefore flexibly be controlled whether the interior volume of the tank is kept completely free of any parts of the injection element or how much of the injection element is arranged inside the interior volume. The injection element therefore yields the possibility to completely remove any of its components from the interior volume of the tank in order to remove any obstacles from the tank if necessary.

It is particularly possible to arrange several inner pipes as a pipe-in-pipe-arrangement, especially telescope-like, inside the outer pipe, such that each of these inner pipes is movable relative to the outer pipe and extractable at least partially out of the outlet end of the outer pipe. Each of these inner pipes can particularly be moved to be arranged entirely inside the outer pipe, such that no part of these inner pipes is arranged inside the interior tank volume. Further, it is particularly possible to flexibly extract one or several of the inner pipes out of the outer pipe and therefore into the interior volume of the tank.

With the inlet end of the outer pipe being connected with the corresponding fluid providing device, the fluid can be injected via the injection element into the interior volume of the tank. When moving the inner pipe within the interior of the tank, especially provided as a curved or bent inner pipe, an injection angle of the fluid injected into the tank relative to the tank wall can particularly be amended. A flow pattern of a fluid flow inside the interior volume of the tank can therefore easily and flexibly be created or influenced.

The present invention therefore provides the possibility to flexibly inject fluid under different injection angles into the tank by means of injection elements occupying little or no space at all inside the interior volume of the tank.

The complete removal/retraction of components of the injection element from the inside of the tank allows for example an easy cleaning of the tank, e.g. with a cleaning robot, with no obstacles blocking the way of the robot. Thus, a better self-cleaning and waste removal of the tank can be achieved such that a production volume can be kept clean and such that e.g. water quality can be enhanced.

Further, such a removing/retracting of components can facilitate the handling or processing of goods or animals inside the volume of the tank, e.g. fishes. Moreover, obstacles which could negatively influence a desired (circular) fluid flow pattern and could lead to the formation of turbulences, eddies and swirl flows inside the interior volume of the tank can be avoided.

Tanks can be designed and constructed in a space saving manner, as the required space for the fluid injection element is limited. It is particularly not necessary to permanently arrange a fluid inlet device inside the tank, e.g. in the form of one or several pipes or tubes extending from a rim to the bottom of the tank, which can only be removed with great effort out of the interior tank volume and which permanently embody an obstacle inside the interior tank volume. Further, by arranging the outer pipe of the injection element at least partially inside the tank wall and/or at least partially at an outer surface of the tank wall, fluid piping above the tank or below the tank is particularly not necessary, thus saving space and capital expenditures (capex).

The invention expediently allows to easily and flexibly design and locate devices for oxygenation of a fluid or water stream independent of the injection element. Since e.g. fresh water, brackish water and sea water have different properties, oftentimes different oxygenation systems are used for oxygenation of these kinds of waters. With an independent tank water inlet using the injection element, particularly any kind of oxygenation system can be combined for an optimum oxygenation, e.g. cones, reactors, low-head oxygenators (LHO), medium-head oxygenators (MHO), diffusors, venturis, etc.

Particularly, the injection element can be used in combination with a so called "SOLVOX VENTURI" device as distributed by the Applicant. "SOLVOX VENTURI" is a low-pressure unit for optimised dissolution of oxygen in water, which can easily be installed, combines high oxygenation efficiency with low energy demand. Further, "SOLVOX VENTURI" can remove nitrogen from the water while adding oxygen at the same time, which can be important in fish farming, as fish are vulnerable to nitrogen supersaturation.

The present invention can advantageously be used for providing water or oxygenated water to a fish tank or a production tank for fish production or fish farming. By using one or several injection elements, water can constantly and effectively be provided to the fish tank in order to ensure healthy fish, prevent diseases, provide appropriate nutrition, maintain a stable and healthy aquatic environment, improve feed utilisation and feed distribution, shorten growth periods and reduce fish mortality. Particularly, a fish farm's financial viability can significantly be enhanced and additional production stability can be provided.

The possibility to completely retract all of the components of the injection element out of the interior tank volume allows an easier handling of fish when needed as well as developing new and innovative solutions how to handle the fish in large fish tank volumes. The injection element further yields the possibility to use different manual or automated systems that crowd the fish using sliding sections or even false bottoms that can lift the fish upwards or push them downwards towards a fish outlet channel or pipe. However, good hydraulics can still be maintained as the injection element can still create a circular flow pattern when operated in the first state.

Greater production economics can be created for the fish farmer as the complete tank volume can be utilised for fish production. With little or no obstacle or components of the injection element projecting into the tank, fish can distribute freely across the hole tank volume, allowing a larger production of fish per tank volume, particularly with an optimised circulation speed, yielding an improved production efficiency and higher production output per time.

For example, when the flow pattern of the water inside the tank needs to be changed e.g. to fulfil a desired swimming speed of different fish size, the injection element can be adjusted manually or automatic. An automatic option can expediently be linked to a larger control system e.g. allowing interval feeding and trimming of fish at certain times of the day. Further, the injection element can for example easily be automatized to remotely influence hydraulics of the tank.

As explained above, the retractable injection element allows for any surface of the tank to be cleaned e.g. by cleaning robots as all tank surfaces can particularly be smooth and expediently no obstacles are left in the tank. This way, a required additional cleaning for larger fish tanks during the production cycle can easily be performed. For example, for fully growing salmon in a production tank, the fish might stay in the same tank for at least 4 to 6 months or even up to 12 months. During this production time, biological fouling can occur on the inner surface of the tank wall, which needs to be cleaned. Since manual cleaning of a rather deep tank might not be possible, it is particularly expedient to use automated cleaning system or cleaning robots, which are supported by the injection elements. By providing a better self-cleaning of the tank, the water quality can be enhanced for the fish production. Less crushing of waste particles or faeces due to less turbulence and swirl flow can create a better environment for fish production. In particular, if implemented in a recirculation aquaculture system (RAS), better hydraulics, better faeces collection, and less crushing of particles will lead to improved bio filter performance and better water quality.

According to a particularly preferred embodiment of the invention, the outer pipe is configured to be arranged such that the outer pipe does not project through a wall of the tank into the interior volume of the tank. The outer pipe is therefore arranged completely outside of the interior volume of the tank. However, the outer pipe can at least partially be arranged inside the wall of the tank, for example with the outlet end of the outer pipe being flush with an inner surface of the wall of the tank.

According to a particularly preferred embodiment, the outer pipe is configured to be arranged such that, in a first state, the inner pipe does not project through the wall of the tank into the interior volume of the tank, and such that, in a second state, in which the inner pipe is at least partially extracted out of the outlet end of the outer pipe, the inner pipe projects at least partially through the wall of the tank into the interior volume of the tank. In this first state, the inner pipe can for example not be extracted out of the outlet end of the outer pipe and can e.g. be arranged completely inside the outer pipe.

According to the present method of operating a tank, wherein the outer pipe is arranged accordingly, the injection element is controlled in this first state such that the inner pipe does not project through the wall of the tank into the interior volume of the tank. Expediently, the inner pipe is moved in this first state relative to the outer pipe such that no part of the inner pipe is arranged inside the interior volume of the tank. In the second state, the injection element is controlled such that the inner pipe projects at least partially into the interior volume of the tank. Particularly, the inner pipe is moved in this second state relative to the outer pipe such that at least a part of the inner pipe is arranged inside the interior volume of the tank.

In this first state, particularly no part of the injection element projects into the interior volume of the tank and the injection element is expediently arranged completely outside of the interior volume of the tank. In the second state, a part of the injection element, namely a part of the inner pipe extends from the wall of the tank into the interior volume. Even in this second state, the largest part of the injection element is particularly arranged outside of the interior volume of the tank, such that the injection element occupies only a small space of the interior volume of the tank close to the inner surface of the wall of the tank.

In the first state and/or in the second state, fluid can be injected into the interior volume of the tank via the injection element, particularly out of an outlet end of the inner or the outer pipe. In the first state, fluid can particularly be injected directly from the wall into the interior volume of the tank. Expediently, fluid can then be injected with certain angle relative the tank wall, for example perpendicular or at least essentially perpendicular to the wall of the tank. Particularly with a bent or curved inner pipe, when extracting the inner pipe out of the outer pipe and into the interior volume of the tank, a corresponding part of the inner pipe projects particularly at least essentially in the form of a circular arc from the tank wall into the interior volume of the tank. Thus, by moving the outer end of this bent inner pipe into the tank, the injection angle of the water injected into the tank relative to the tank wall can particularly be amended, especially until the fluid is ejected parallel or at least parallel to the wall of the tank. The flow pattern of a fluid flow inside the interior volume of the tank can therefore easily and flexibly be created or influenced.

According to a particularly preferred embodiment, a flow pattern of a fluid flow inside the interior volume of the tank is adjusted or adjustable by moving the inner pipe relative to the outer pipe. When moving the inner pipe, expediently in the second state, and when injecting the fluid through the outer end of the inner pipe into the tank, the fluid flow inside the interior volume can be influenced, thus creating or influencing the flow pattern. Particularly, with differed positions of the inner pipe relative to the outer pipe, different flow patterns inside the interior volume can be created.

According to an advantageous embodiment, the outer pipe is configured to be arranged such that, in the first state, the outlet end of the outer pipe and/or an outlet end of the inner pipe are arranged flush with an inner surface of the wall of the tank. Particularly, the outer pipe can be arranged at least partially inside the wall of the tank, such that the outlet end of the outer pipe is arranged flush with the inner surface of the tank wall. In this case, the inner pipe is expediently arranged completely inside the outer pipe in the first state. It is, however, also possible to arrange the outer pipe e.g. entirely outside of the tank wall, e.g. such that the outlet end of the outer pipe is connected with the outer surface of the wall. In this case, the outlet end of the inner pipe is particularly permanently arranged outside of the outer pipe. In this case, the outlet end of the inner pipe is expediently arranged flush with the inner surface of the tank wall in the first state.

According to an advantageous embodiment, the injection element is configured such that, especially in the second state, a position of the inner pipe, particularly a position of an outlet end of the inner pipe, is adjustable or controllable relative to the outlet end of the outer pipe and/or to the wall of the tank, particularly to the inner surface of the wall of the tank, and/or to a circumference of the tank and/or to a centre of the tank. For this purpose, the inner pipe can be moved expediently relative to the outer pipe and/or to a reference position or reference point of the tank, such that the position of the outlet end of the inner pipe can continuously be adjusted from a position corresponding to the inner surface of the wall to a maximum position or maximum extraction position. Therefore, by controlling the position of the outlet end of the inner pipe, which corresponds to the position at which fluid is injected into the interior tank volume, the fluid flow or flow pattern inside the tank can expediently be adjusted, influenced or controlled.

According to an advantageous embodiment, an injection angle of fluid injected into the interior volume of the tank via the injection element is adjusted or controlled, especially in the second state, in dependence of the position of the inner pipe, particularly in dependence of the position of the outlet end of the inner pipe. Moving the inner pipe and thus varying the position of the outlet end of the inner pipe allows to release fluid into the tank at different positions and with different angles relative to the tank wall. Particularly, the injection angle can continuously be controlled in a given angle range from a first threshold value, when the outlet end of the inner pipe is flush with the inner surface of the tank, to a second threshold value, when the outlet end of the inner pipe reaches its maximum extraction position. For example, this first threshold value can correspond to a fluid injection perpendicular or at least essentially perpendicular to the tank wall and the second threshold value can correspond to a fluid injection parallel or at least essentially parallel to the tank wall. By controlling the injection angel, the fluid flow pattern inside the tank can expediently be adjusted, influenced or controlled.

In common injection systems e.g. with pipes or tubes arranged permanently inside the interior tank volume, these pipes or tubes can be rotated around their own axis to allow adjusting the direction of the fluid flow. In contrast to that, the present injection element allows easily adjusting the fluid injection angle while occupying only little space and without permanently embodying an obstacle inside the interior tank volume.

When the inner pipe, particularly provided as a bent pipe, is partly or maximally extracted out of the outer pipe, the injected fluid can particularly circulate along the tank wall and follow the tank wall. The correspondingly injected fluid jet can then push the fluid in the tank, resulting in less turbulence and less creation of swirl flow eddies. Thus, a homogenous fluid movement in the hole tank volume can be created, which can e.g. be desired for aquaculture production tanks. A large portion of the fluid jet energy can therefore be transferred into the fluid volume as energy that will push the fluid inside the tank volume to a desired circulating speed. For example, less energy is therefore needed to achieve a desired circulating speed compared to an inlet system, which is mounted flush with the tank wall at any given time.

Preferably, a circular speed of the fluid in the tank, especially the speed of the circular fluid flow inside the interior volume of the tank, is adjusted or controlled in dependence of the injection angle. Particularly, changing the position of the outlet end of the inner pipe and thus changing the injection angle directly influences the circular fluid speed inside the tank. The injection element therefore allows to adjust and control the tank flow pattern by changing the angle with which the fluid is injected into the tank. The circular speed of the fluid flow and the flow pattern inside the tank can particularly be controlled independent of and without changing the fluid flow rate. Therefore, even with a constant flow rate of fluid injected into the tank, the circulation speed and the flow pattern can flexibly be adjusted and controlled.

Therefore, the injection element for example allows a fish farmer to flexibly adjust the speed of the circular water flow independently from the water usage thereby allowing a greater optimisation of the tank to fit different fish sizes or production scenarios. This way of controlling and adjusting the circulation speed of the tank for example yields the possibility for interval trimming of the fish, i.e. the swimming speed of the fish can be changed during the day in combination with interval feeding. This can yield positive effects on production performance, immune system of the fish, growth rate, feed utilisation, and reduced risk of disease outbreak.

Advantageously, the specific dimensions of the injection element, particularly the length and the radius of curvature of the outer and inner pipe as well as shapes and sizes of the cross sections of the pipes, are designed in dependence of the specific tank, with which the respective injection element is to be used, particularly in dependence of a desired hydraulic behaviour inside the tank, e.g. a desired fluid flow or flow pattern. Expediently, the injection element can individually be designed and constructed for usage in various kinds of tanks of different sizes, shapes and application ranges. In particular, a scalable predicting model, e.g. a computational fluid dynamics (CFD) model, can be used for designing the injection element. A model of that kind can e.g. be used to predict changes in the flow pattern inside the tank depending on varying dimensions of the injection element. Particularly, the model can be utilised in order to foresee hydraulics in any tank volume using a correspondingly designed injection element, especially independent of water usage, tank measurements and retention time. Alternatively or additionally to a model of that kind, an experience based sizing tool and/or real performance measurements can be utilised for designing the injection element.

For example, the injection element can be designed in order to achieve an optimum fish tank hydraulics and circular swimming speed for the fish and thus to achieve optimum biological performance and economics for the fish farmer. The water inlet systems are often the only means of creating these optimum conditions, but very few of water inlet systems according to the prior art can be scaled to new tank geometries and still create optimum conditions. However, the injection element can easily be adapted to new tank geometries in order to achieve optimum hydraulic conditions.

The present invention further relates to an injection system comprising at least two injection elements, wherein these injection elements are configured to be arranged at predetermined positions relative to the wall of the tank. Depending on the size of the tank and the desired fluid flow pattern, several injection elements can be provided as a combined injection system and can be arranged at specific positions relative to each other in order to achieve the corresponding flow pattern. The injection system is especially a modular system, wherein the number and the design of the injection elements can individually and easily be amended. The various injection elements of the injection system, particularly the inlet ends of the outer pipes, can especially be connected with a common fluid providing element, e.g. with a manifold for providing the fluid to each injection element. The injection elements can for example be distributed evenly along the height and circumference of the tank wall. Each injection element can for example be individually designed and constructed. Individual injection elements might expediently be designed differently from the other injection elements of the system. However, it is also possible to design and construct each injection element of the injection system identical or at least essentially identical. Particularly, several or all injection elements of the injection system can be adjusted and controlled commonly or in dependence of each other, for example with a common gear system or especially by means of a common control unit, e.g. a programmable logic controller (PLC).

Advantageously, the injection system is configured such that the inner pipes of the injection elements are simultaneously or synchronously extractable at least partially out of the corresponding outlet ends of the outer pipes. The various inner pipes can therefore simultaneously or synchronously be moved, especially such that, in the second state, the inner pipes project simultaneously or synchronously through the wall of the tank into the interior volume of the tank. Particularly, the positions of the outer ends of the inner pipes can synchronously and simultaneously be adjusted and controlled relative to the respective outer pipes and/or relative to the wall, circumference or centre of the tank. The various injection elements can therefore expediently be controlled in dependence of each other in order to create a desired fluid flow pattern inside the tank.

Preferably, the injection system comprises an injection element row with at least two injection elements configured to be arranged in a vertical row or at least essentially in a vertical row relative to the wall of the tank. Expediently, these injecting elements can be arranged equidistant to each other, especially evenly distributed along the height of the tank, e.g. from a tank bottom to a fluid surface or maximum filling height. Particularly, these injection elements of the injection element row are connected with a common fluid providing device.

Preferably, the injection system comprises at least two injection element rows configured to be arranged at predetermined positions relative to the circumference of the wall of the tank. These injection element rows can especially be arranged equidistant to each other in a circumferential direction relative to the tank wall. For example, two injection element rows can be arranged 180° apart from each other or three injection element rows can be arranged 120° apart from each other or four three injection element rows can be arranged 90° apart from each other and so on. The arrangement of these injection element rows yields the possibility to create optimum hydraulics and a desired fluid flow pattern also for very large tank volumes. The injection element rows can expediently push the fluid at several distinct positions around the geometry of the tank, thereby creating a homogenous fluid movement in the entire tank volume.

The invention further relates to a tank comprising at least one injection element and/or an injection system according to the above description. The tank is particularly configured to be operated according to a method of the present invention.

Preferably, an opening is provided in the wall of the tank for each injection element. Expediently, the inner pipes of the injection elements can project through these openings into the interior volume of the tank. Each of these openings is advantageously configured to be blocked by a cover element, e.g. a sliding cover element. For example, when emptying the tank, e.g. for retrieving the fish, the inner pipes can be retracted out of the interior volume of the tank and one or more of the openings can be blocked. The possibility to block the opening enables an optimum emptying of the tank and efficient retrieving, handling and transferring of the fish. For example, the water level in the tank can be lowered at the same time as the fish are transported out of the tank through pipes in the bottom of the tank or pumped in pipelines over or through the tank wall. Water inlet systems according to the prior art oftentimes do not yield the possibility to close water inlet openings when lowering the water level of the tank. If there is no possibility to close individual water inlet openings during emptying of a tank by lowering the water level, water can still splash onto the water surface from above outlet openings located higher than the tank water surface, which can leads to poor oxygenation performance due to de-gassing of oxygen caused by the rapid change in water pressure.

In an expedient embodiment, an automatic stop of the fluid flow through the inner pipe can be established at a predetermined position of the inner pipe. For example, when the inner pipe is fully subtracted or retracted, a mechanical contact can be established between the inner pipe and the fluid providing device or manifold connected to the outer pipe. This way, by fully subtracting the inner pipe into the outer pipe an automatic stop of fluid flow through the corresponding inner pipe can be enabled. A partial subtraction allowing the inner pipe to be flush with the outer pipe at the tank wall or in any chosen position of the inner pipe inside the tank volume will still lead to full fluid flow through the inner pipe.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which
- Figure 1: schematically shows an injection element according to a preferred embodiment of the present invention in a perspective view.
- Figure 2: schematically shows a tank with an injection element according to a preferred embodiment of the present invention in a top view.
- Figure 3: schematically shows a section of a wall of tank with injection elements according to a preferred embodiment of the present invention in a front view.
- Figure 4: schematically shows a tank with injection elements according to a preferred embodiment of the present invention in a top view.

### Detailed description

In the figures, identical reference signs refer to identical or identically constructed elements.

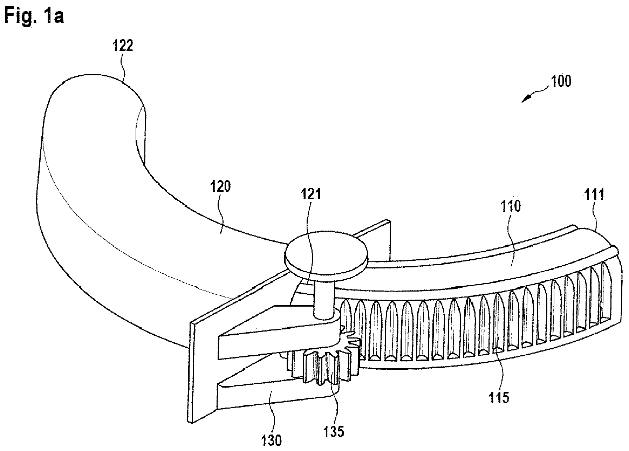

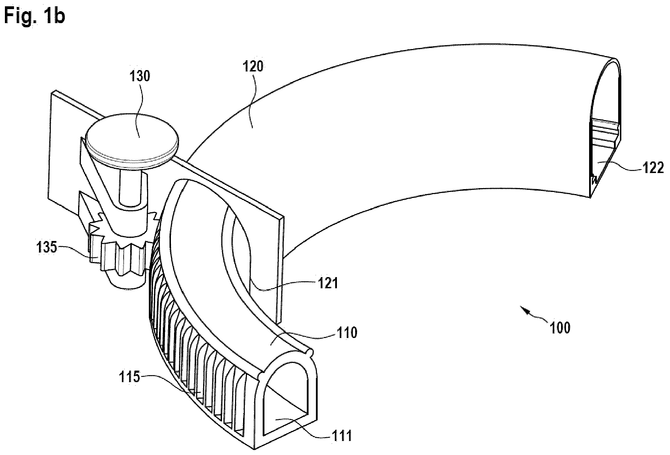

Figure 1a and 1b schematically show a preferred embodiment of an injection element 100 according to the present invention.

The injection element 100 comprises an inner pipe 110 and an outer pipe 120, wherein the inner pipe 110 is arranged at least partially inside the outer pipe 120.

For example, the inner pipe 110 and the outer pipe 120 can each be bent or curved pipes, e.g. circularly or at least essentially circularly bent with identical radii of curvature. A cross section of the inner pipe 110 and the outer pipe 120 can have an expedient form or geometry. In the example of Fig. 1a and 1b, the cross section of the pipes 110, 120 is arched or arch shaped. However, these cross sections can e.g. be circular shaped, elliptical shaped, square shaped, triangle shaped, etc.

The outer pipe comprises an outlet end 121 and an inlet end 122. This inlet end 122 can be connected with a fluid providing device, e.g. a pump, a manifold or the like. The inner pipe 110 is movable relative to the outer pipe 120, such that the inner pipe 110 can be extracted at least partially out of the outlet end 121 of the outer pipe 120. In particular, an outlet end 111 of the inner pipe 110 is extractable out of the outlet end 121 of the outer pipe 120. Further, a position of the outlet end 111 of the inner pipe 110 can be adjusted or controlled relative to the outlet end 121 of the outer pipe 120.

For this purpose, a moving mechanism 130 is provided. For example, this moving mechanism 130 can comprise a gear 135 meshing with or engaging in a gear rack structure 115 on an outer surface of the inner pipe 110. It is also possible to use other kinds of moving mechanism, particularly such that the inner pipe 110 can be arranged completely inside the outer pipe 120.

It is further possible to provide several inner pipes as a pipe-in-pipe-arrangement inside the outer pipe. In this case, one or several further inner pipes can be arranged inside the inner pipe 110 movable relative to the outer pipe 120.

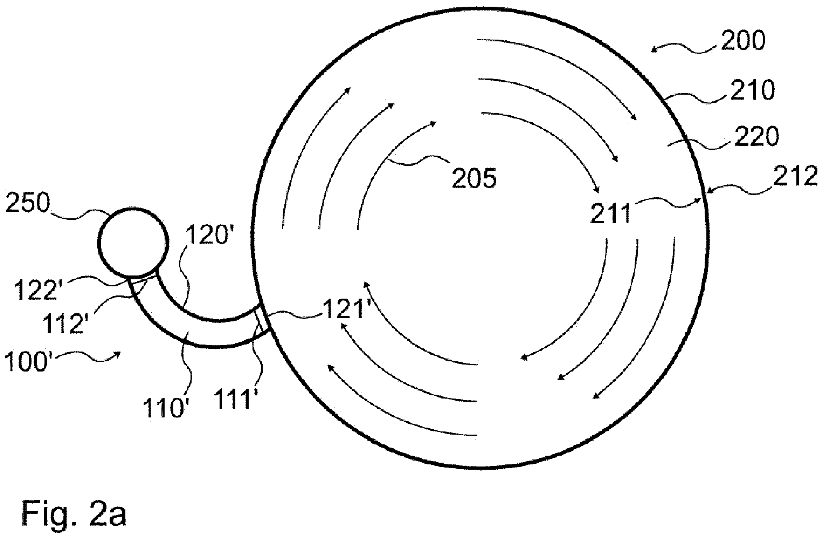

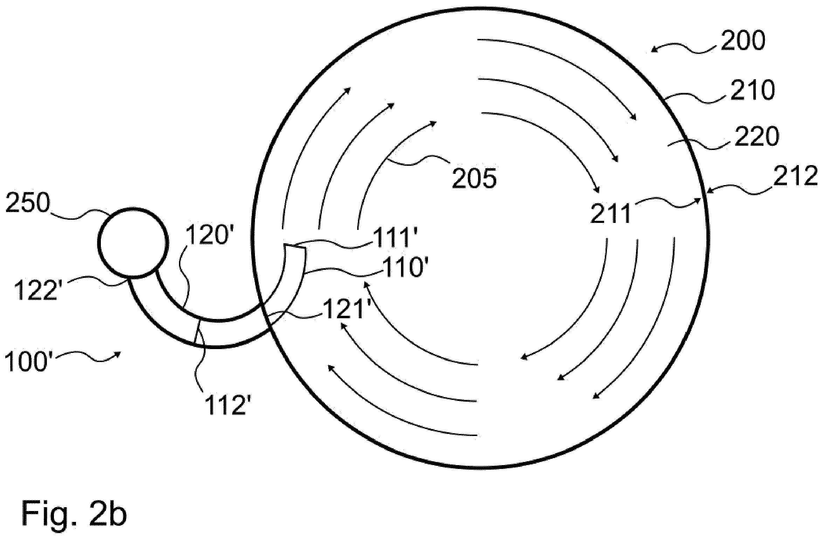

The injection element 100 is configured to inject a fluid into an interior volume of a tank, as will be explained with reference to Fig. 2a and 2b, which shows a schematically top view of a corresponding tank 200.

An interior volume or inner volume 220 of the tank 200 is enclosed by a wall 210, comprising an inner surface 211 facing towards the interior volume 220 and comprising an outer surface 212 facing away from the interior volume 220. A fluid, e.g. water or oxygenated water, can be provided to the interior volume 220 for storing or handling goods, e.g. for growing fish.

A preferred embodiment of an injection element 100' is provided relative to the wall 210 of the tank 200. Correspondingly to the injection element 100 of Fig. 1a and 1b, the injection element 100' shown in Fig. 2a and 2b comprises an outer pipe 120' with an outlet end 121' and an inlet end 122'. The injection element 100' further comprises an inner pipe 110' with an outlet end 121' and an inlet end 122', wherein the inner pipe 110' is movable relative to the outer pipe 120'. In particular, the inner pipe 110' can be arranged entirely inside the outer pipe 120'. Further, a part of the inner pipe 110' can be extracted out of the outlet end 121' of the outer pipe 120'. The moving mechanism for moving the inner pipe 110' is not explicitly shown. In contrast to the injection element 100 of Fig. 1a and 1b, the outer pipe 120' and the inner pipe 110' each comprise a circular cross section.

The outer pipe 120' is arranged particular entirely outside of the interior volume 210. Thus, the outlet end 121' of the outer pipe 120' is arranged outside of the interior volume 210 such that the outer pipe 120' does not project through the wall 210 into the interior volume 220 of the tank 200. The outer pipe 120' can be arranged partially inside the wall 210, i.e. partially inside an opening in the tank wall 210, e.g. such that the outlet end 121' of the outer pipe 120' is flush with the inner surface 211 of the wall 210. The inlet end 122' of the outer pipe 120' is connected with a manifold 250 for providing the fluid to the injection element 100', e.g. oxygenated water.

Fig. 2a shows the injection element 100' in a first state, in which the inner pipe 110' also does not project through the wall 210 into the interior volume 220 of the tank 200. In this first state, the inner pipe 110' is arranged entirely inside the outer pipe 120', i.e. such that both the outlet end 111' and the inlet end 112' of the inner pipe 110' are arranged inside the outer pipe 120'. In this first state, fluid provided by the manifold 250 can be ejected out of the outlet end 121' of the outer pipe 120' into the interior volume 220 of the tank 200 with a perpendicular or at least essentially perpendicular injection angle relative the tank wall 210.

Fig. 2b shows the injection element 100' in a second state, in which the inner pipe 110' is extracted partially out of the outer pipe 120' and projects at least partially through the wall 210 into the interior volume 220 of the tank 200. The outlet end 111' of the inner pipe 110' is therefore arranged inside the interior volume 220 of the tank 200, whereas the inlet end 112' of the inner pipe 110' is arranged inside the outer pipe 120'. In this second state, fluid provided by the manifold 250 is ejected out of the outlet end 111' of the outer pipe 110' into the interior volume 220 of the tank 200 with an injection angel more parallel to the tank wall 210 than in the first state.

A position of the outlet end 111' of the inner pipe 110' can be adjusted or controlled in the second state relative to the outlet end 121' of the outer pipe 120' as well as relative to the inner surface 211 of the wall 210, to a circumference of the tank 200 and to a centre of the tank 200. By moving the outlet end 111' of the inner pipe 110' inside the interior volume 220 of the tank 200, the injection angle of the fluid injected out of this outlet end 111' into the tank 200 relative to the tank wall 210 can be varied. In particular, this injection angle is adjusted and controlled in dependence of the position of the outlet end 111' of the inner pipe 110'. Further, a circular speed of a fluid flow 205 inside the interior volume 220 of the tank 200 is adjusted and controlled in dependence of this injection angle and therefore in dependence of the position of the outlet end 111' of the inner pipe 110'.

Therefore, by moving the inner pipe 110' relative to the outer pipe 120', i.e. by moving the outlet end 111' of the inner pipe 110', a flow pattern of the fluid flow 205 inside the interior volume 220 of the tank 200 can be adjusted, created, influenced and controlled. Further, by changing the position of the outlet end 111', the injection angle of the fluid and the circular fluid speed inside the tank 200 can directly be influenced, independent of and without changing the fluid flow rate of the fluid flowing through the injection element 100'. Thus, even with a constant flow rate the flow pattern 205 can be controlled. Further, a homogenous fluid movement in the tank can be created.

In the first state, no part of the injection element 100' projects into the interior volume 220 of the tank 200. For example, all components of the injection element 100' can be removed from the inside of the tank 200 for an easy cleaning of the tank 200, e.g. with a cleaning robot with no obstacles blocking the way of the robot. In the second state, only a small part of the injection element 100' extends from the wall 210 into the interior volume 220, thus only occupying a small space in the interior volume 220. It can therefore flexibly be controlled whether the interior volume 220 of the tank 200 is kept completely free of any parts of the injection element 100' or how much of the injection element 100' projects into the interior volume 220. With the injection element 100' occupying only little or no space at all inside the interior volume 220, obstacles which could negatively influence the desired circular fluid flow pattern 205 and could lead to the formation of turbulences, eddies and swirl flows can be avoided.

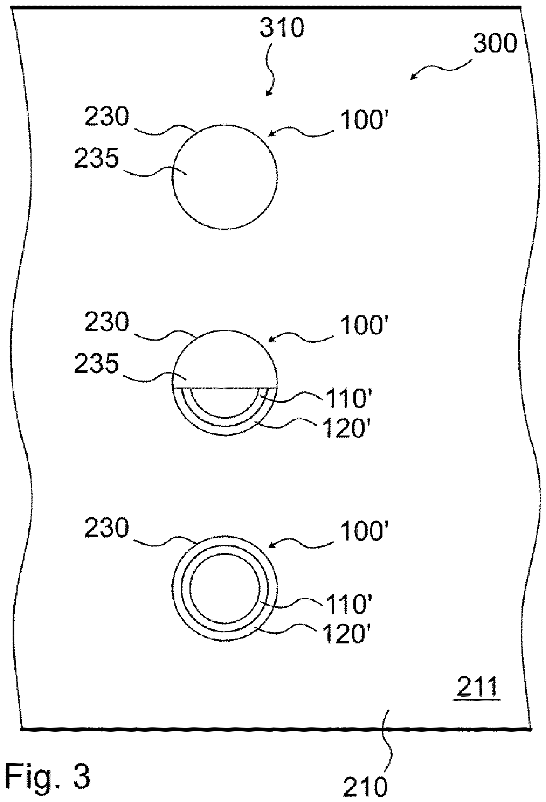

It is further possible, to combine several injection elements to a common injection system, as shall now be explained with reference to Fig. 3, which shows a schematic front view of a section of the inner surface 211 of the tank 200.

As can be seen in Fig. 3, several injection elements 100' are arranged in a vertical row or at least essentially in a vertical row relative to the wall 210 of the tank 200. These injection elements 100' form an injection element row 310 of a corresponding injection system 300, wherein these injection elements 100' can synchronously be controlled. In particular, the inner pipes 110' of these injection elements 100' can simultaneously and synchronously be extracted out of the corresponding outer pipes 120'.

For reasons of clarity, only three injection elements 100' are shown in Fig. 3. However, the injection element row 310 can comprise an expedient number of vertically arranged injection elements 100', particularly evenly distributed over the height of the tank wall 210, e.g. form a bottom to a top or to a maximum filling height of the tank wall 210.

As can further be seen in Fig. 3, openings 230 are provided in the wall 210, in particular one opening 230 for each injection element 100'. For example, the shape of each opening 230 can correspond to the shape of the circumference of the outer pipe 120' of the corresponding injection element 100'.

Each opening 230 can individually be blocked by a cover element 235. As exemplarily shown in Fig. 3, the upper opening 230 is blocked entirely by the corresponding cover 235 and half of the middle opening 230 is blocked by its corresponding cover 235.

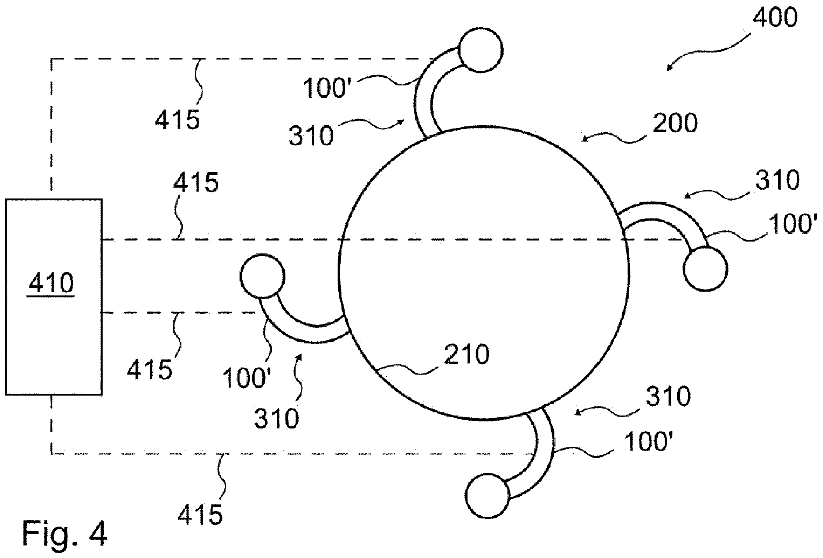

Furthermore, the common injection system can also comprise several injection element rows, as will now be explained with reference to Fig. 4, which schematically shows the tank 200 in a top view.

In the example of Fig. 4, the corresponding injection system 400 comprises four injection element rows 310 arranged equidistant to each other around the circumference of the tank wall 210, i.e. 90° apart from each other.

Since each injection element row 310 comprises several, e.g. three, injection elements 100' arranged parallel over another, only the top injection element 100' of each injection element row 310 is shown in the schematic top view of Fig. 4.

The injection elements 100' of the injection system 400 can be controlled by means of a common control unit 410, e.g. a programmable logic controller (PLC). Control lines 415 are schematically shown in Fig. 4 and shall indicate that the PLC 410 controls each injection element 100' of each injection element row 310. For example, the PLC 410 can control each injection element 100' individually or also all injection elements 100' commonly, synchronously and in dependence of each other.

### List of reference signs

- 100: injection element

- 110: inner pipe
- 111: outlet end of the inner pipe 110
- 112: inlet end of the inner pipe 110
- 115: gear rack structure
- 120: outer pipe
- 121: outlet end of the outer pipe 120
- 122: inlet end of the outer pipe 120

- 110': inner pipe
- 111': outlet end of the inner pipe 110'
- 112': inlet end of the inner pipe 110'
- 120': outer pipe
- 121': outlet end of the outer pipe 120'
- 122': inlet end of the outer pipe 120'

- 130: moving mechanism
- 135: gear

- 200: tank
- 205: fluid flow
- 210: wall of the tank 200
- 211: inner surface of the wall 210
- 211: outer surface of the wall 210
- 220: interior volume of the tank 200
- 230: opening in wall 210
- 235: cover or the opening 230
- 250: manifold

- 300: injection system
- 310: injection element row
- 400: injection system
- 410: control unit
- 415: control line

## Claims

1. An injection element (100, 100') for injecting a fluid into a tank (200), especially for injecting water into the tank (200), especially into a fish tank (200),
wherein the injection element (100, 100') comprises an outer pipe (120, 120') and an inner pipe (110, 110') arranged at least partially inside the outer pipe (120, 120'),
wherein the inner pipe (110, 110') is extractable at least partially out of an outlet end (121, 121') of the outer pipe (120, 120'),
wherein an inlet end (122, 122') of the outer pipe (120, 120') is configured to be connected with a fluid providing device (250), and
wherein the outer pipe (120, 120') is configured to be arranged mainly outside of an interior volume (220) of the tank (200) and an outlet end (121, 121') of the outer pipe (120, 120') is configured to be connected with an opening in a wall (210) of the tank (200).

2. The injection element (100, 100') according to claim 1, wherein the outer pipe (120, 120') is configured to be arranged such that
the outer pipe (120, 120') does not project through the wall (210) of the tank (200) into the interior volume (220) of the tank (200),
in a first state, the inner pipe (110, 110') does not project through the wall (210) of the tank (200) into the interior volume (220) of the tank (200), and
in a second state, in which the inner pipe (110, 110') is at least partially extracted out of the outlet end (121, 121') of the outer pipe (120, 120'), the inner pipe (110, 110') projects at least partially through the wall (210) of the tank (200) into the interior volume (220) of the tank (200).

3. The injection element (100, 100') according to claim 2, wherein the outer pipe (120, 120') is configured to be arranged such that, in the first state, the outlet end (121, 121') of the outer pipe (120, 120') and/or an outlet end (111, 111') of the inner pipe (110, 110') are arranged flush with an inner surface (211) of the wall (210) of the tank (200).

4. The injection element (100, 100') according to any one of the preceding claims, configured such that a flow pattern of a fluid flow inside the interior volume (220) of the tank (200) is adjustable by moving the inner pipe (110, 110') relative to the outer pipe (120, 120').

5. The injection element (100, 100') according to any one of the preceding claims, wherein the injection element (100, 100') is configured such that a position of the inner pipe (110, 110'), particularly a position of an outlet end (111, 111') of the inner pipe (110, 110'), is adjustable relative to the outlet end (121, 121') of the outer pipe (120, 120') and/or to the wall (210) of the tank (200) and/or to a circumference of the tank (200) and/or to a centre of the tank (200).

6. An injection system (300, 400) for injecting a fluid into a tank (200) comprising at least two injection elements (100, 100') according to any one of the preceding claims, wherein the at least two injection elements (100, 100') are configured to be arranged at predetermined positions relative to the wall (210) of the tank (200).

7. The injection system (300, 400) according to claim 6, configured such that the inner pipes (110, 110') of the at least two injection elements (100, 100') are simultaneously extractable at least partially out of the corresponding outlet ends (121, 121') of the outer pipes (120, 120') of the at least two injection elements (100, 100').

8. The injection system (300, 400) according to claim 6 or 7, comprising an injection element row (310) with at least two injection elements (100, 100') configured to be arranged in a vertical row or at least essentially in a vertical row relative to the wall (210) of the tank (200), particularly comprising at least two injection element rows (310) configured to be arranged at predetermined positions relative to a circumference of the wall (210) of the tank (200).

9. A tank (200), especially a fish tank, comprising at least one injection element (100, 100') according to any one of the claims 1 to 5 and/or an injection system (300, 400) according to any one of the claims 6 to 8.

10. The tank (200) according to claim 9, wherein an opening (230) is provided in the wall (210) of the tank (200) for each injection element (100, 100'), wherein each of these openings (230) is configured to be blocked by a cover element (235).

11. A method of operating a tank (200), particularly a fish tank, with an injection element (100, 100') according any one of the claims 1 to 5, comprising the steps of:
in a first state, controlling the injection element (100, 100') such that the inner pipe (110, 110') of the injection element (100, 100') does not project through the wall (210) of the tank (200) into the interior volume (220) of the tank (200), and
in a second state, controlling the injection element (100, 100') such that the inner pipe (110, 110') of the injection element (100, 100') projects at least partially into the interior volume (220) of the tank (200).

12. The method according to claim 11, further comprising:
adjusting a flow pattern of a fluid flow inside the interior volume (220) of the tank (200) by moving the inner pipe (110, 110') relative to the outer pipe (120, 120').

13. The method according to claim 11 or 12, further comprising:
adjusting a position of the inner pipe (110, 110'), particularly a position of the outlet end (111, 111') of the inner pipe (110, 110'), relative to an outlet end (121, 121') of the outer pipe (120, 120') and/or to the wall (210) of the tank (200) and/or to a circumference of the tank (200) and/or to a centre of the tank (200).

14. The method according to claim 13, further comprising:
adjusting an injection angle of fluid (205) injected into the interior volume (220) of the tank (200) via the injection element (100, 100') in dependence of the position of the inner pipe (110, 110'), particularly in dependence of the position of the outlet end (111, 111') of the inner pipe (110, 110'), particularly adjusting a circular speed of the fluid (205) in the tank (200) in dependence of the injection angle.

15. The method according to any one of the claims 11 to 14, further comprising:
designing dimensions of the injection element (100, 100'), comprising a length of the outer pipe (120, 120') and the inner pipe (110, 110') and/or a shape and size of a cross section of the outer pipe (120, 120') and the inner pipe (110, 110') and/or a radius of curvature of the outer pipe (120, 120') and the inner pipe (110, 110'), in dependence of the tank (200) and/or in dependence of a desired hydraulic behaviour in the interior volume (220) of the tank (200).
